# FASCICULE DE BREVET EUROPEEN

(11) **EP 3 194 817 B1**
(45) Date de publication et mention de la délivrance du brevet: **20.06.2018**
(21) Numéro de dépôt: 15760227.7
(22) Date de dépôt: 24.08.2015
(51) Int. Cl.: F16K 11/052, F16K 1/20, F16K 1/226, F16K 1/228

(54) **VANNE DE CONTRÔLE MOTEUR DANS UN VÉHICULE AUTOMOBILE**
MOTORREGELVENTIL IN EINEM KRAFTFAHRZEUG
ENGINE CONTROL VALVE IN A MOTOR VEHICLE

(30) Priorité: 25.08.2014 FR 1457970
(43) Date de publication de la demande: 26.07.2017
(73) Titulaire: Valeo Systèmes De Contrôle Moteur, 95800 Cergy Saint Christophe (FR)
(72) Inventeur: HODEBOURG, Grégory, F-78500 Sartrouville (FR)
(74) Mandataire: Garcia, Christine
(86) Numéro de dépôt international: PCT/FR2015/052259
(87) Numéro de publication internationale: WO 2016/030626

(56) Documents cités:
- WO-A1-2013/190589
- FR-A1- 2 990 743
- JP-A- H03 286 152
- JP-A- 2005 171 808

## Description

L'invention se rapporte à une vanne de contrôle moteur ainsi qu'à un moteur et un véhicule automobile comprenant une telle vanne.

De manière traditionnel, les moteurs actuels comprennent un système de dépollution par recirculation des gaz d'échappement qui est constitué d'une conduite permettant de faire transiter les gaz d'échappement vers l'admission, assortie d'un échangeur thermique destiné à refroidir les gaz brûlés et d'une vanne, appelée communément vanne de recirculation des gaz d'échappement (RGE ou EGR en anglais pour Exhaust Gas Recirculation), dont l'ouverture est pilotée par un calculateur de contrôle moteur afin de régler le débit de gaz brûlés réintroduits en direction de l'admission.

Le principe de fonctionnement de ce type de vanne repose ainsi sur la rotation commandée d'un volet, pouvant passer d'une position d'ouverture complète pour laisser passer le fluide de gaz d'échappement, à une position de fermeture pour bloquer ce passage.

Une vanne de contrôle moteur possède donc un volet, qui est monté pivotant sur un axe de rotation, de sorte que ledit axe sépare le volet en une première partie et en une deuxième partie. Il est à préciser qu'aucune limite physique ne matérialise la frontière entre la première et la deuxième partie du volet, lesdites parties étant séparées fictivement par un plan passant par l'axe de rotation du volet et coupant ledit volet perpendiculairement. Lorsque ce volet se retrouve dans une position de fermeture, il vient au contact de moyens d'étanchéité, tel qu'un joint, qui sont solidaires du corps de vanne, plus particulièrement de la structure interne du corps de vanne. Plus précisément, la première partie vient au contact d'une face du joint, tandis que la deuxième partie dudit volet vient en appui sur la face opposée dudit joint.

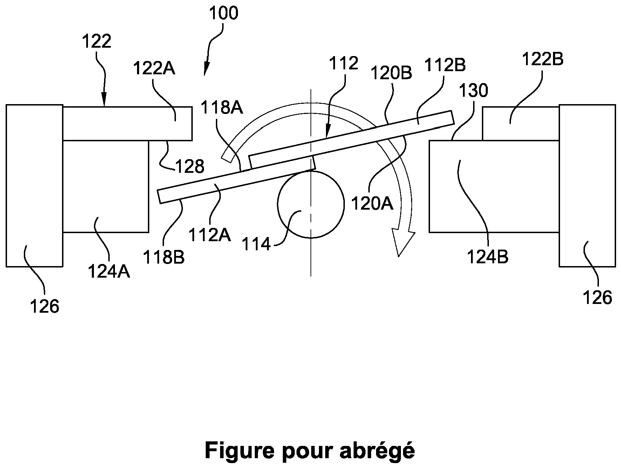

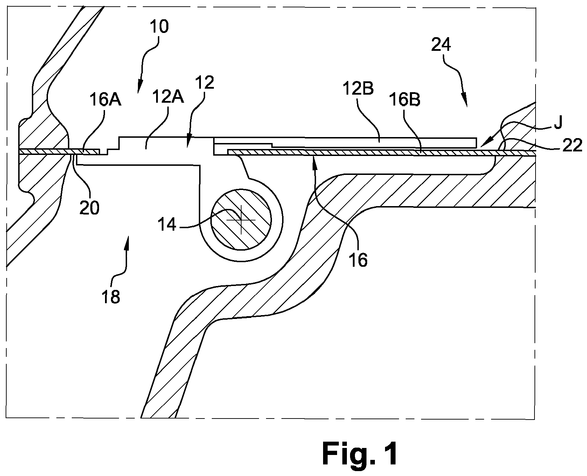

En effet, en se référant à la figure 1, une vanne de contrôle moteur 10 de la technique antérieure comprend un volet 12 monté à rotation autour d'un axe de rotation 14, séparant ledit volet 16 en une première 12A et une deuxième partie 12B, lesdites parties 12A, 12B étant reliées l'une à l'autre de façon rigide et en continuité l'une de l'autre. Le volet 12 a, en section, globalement la forme d'un parallélépipède rectangle de faible épaisseur, dont l'axe longitudinal est perpendiculaire à l'axe 14 de rotation qui traverse ledit volet 12.

Le joint 16 de la structure interne de la vanne 10, contre lequel vient en appui le volet 12 lorsque celui-ci se retrouve dans une position de fermeture, est plan et comprend une première portion 16A apte à coopérer à étanchéité avec la première partie 12A du volet 12, et une deuxième 16B portion destinée à coopérer à étanchéité avec la deuxième partie 12B dudit volet 12. Les deux portions 16A, 16B du joint 16 sont planes et en continuité l'une de l'autre. En se référant à la figure 1, lorsque le volet 12 pivote pour se fermer, la première partie 12A remonte dans le sens indiqué par la flèche 18, pour venir en contact à étanchéité avec une première surface plane 20 de la première portion 16A du joint 16, tandis que la deuxième partie 12B du volet 12 se rabat sur une seconde surface plane 22, opposée à la première surface 20, de la deuxième portion 16B du joint 16, dans le sens indiqué par la flèche 24.

En pratique, l'appui des première 12A et deuxième 12B parties du volet 12 sur les faces 20, 22 opposées sur joint 16 implique qu'il est nécessaire de décaler les faces d'appui respectives des première 12A et seconde 12B parties du volet 12. Toutefois, les tolérances de fabrication du volet 12 et du joint 16 montrent qu'en pratique la première partie 12A du volet12, par exemple, est en contact avec la première portion 16A du joint 16 et qu'un jeu J subsiste entre la deuxième portion 16B du joint 16 et la deuxième partie 12B. Ce jeu J est ainsi à l'origine d'une circulation parasite de gaz qui n'est pas souhaitée et ne permet pas un fonctionnement optimal du système de dépollution.

Ce jeu J est principalement la conséquence des tolérances de fabrication du volet 12 et du joint 16 ainsi que des tolérances de positionnement de ces éléments dans le corps de vanne 10. Hors, la réduction des tolérances de fabrication pour réduire le jeu J impliquerait une augmentation importante des couts de fabrication, ce qui n'est pas acceptable.

De plus, pour garantir un bon fonctionnement du système de dépollution, il est important de pouvoir parfaitement contrôler l'écoulement des gaz au travers du volet 12 et ainsi de pouvoir s'assurer de la fermeture totale de la vanne lorsque cela est nécessaire. FR2990743 décrit une vanne de contrôle moteur similaire à celle présentée en figure 1. WO2013/190589 et JP2005171808 décrivent d'autres exemples de vannes de contrôle moteur qui comportent un ou plusieurs joints d'étanchéité capables de coulisser dans dans le corps de vanne. L'invention a notamment pour but d'améliorer l'étanchéité de la vanne en positon de fermeture.

A cette fin, elle propose une vanne de contrôle moteur pour un véhicule, en particulier un véhicule automobile, comprenant un volet monté à rotation dans un corps de vanne autour d'un axe séparant ledit volet en une première partie et une deuxième partie, ledit volet étant apte à coopérer avec des moyens d'étanchéité portés par le corps de vanne dans une position de fermeture pour stopper l'écoulement d'un fluide au travers dudit volet pour laquelle la première partie du volet coopère à étanchéité avec des premiers moyens d'étanchéité et la seconde partie du volet coopère à étanchéité avec des seconds moyens d'étanchéité, caractérisée en ce que les premiers moyens d'étanchéité et les seconds moyens d'étanchéité sont montés solidairement à coulissement le long du corps de vanne.

Ainsi, lors du déplacement de la vanne depuis une position d'ouverture vers sa position de fermeture, la première partie du volet, par exemple vient tout d'abord en contact avec les premiers moyens d'étanchéité. Du fait du montage à coulissement solidaires sur le corps de vanne, les premiers et seconds moyens se déplacent solidairement dans le sens de la force exercée par la première partie du volet sur les premiers moyens d'étanchéité, ce qui induit un rapprochement des seconds moyens et de la deuxième partie du volet jusqu'à ce qu'il viennent en contact. L'invention permet ainsi de réduire l'impact des tolérances de fabrication sur l'étanchéité de la vanne en position de fermeture.

Avantageusement, les premiers moyens d'étanchéité comprennent un premier joint annulaire et les seconds moyens d'étanchéité comprennent un second joint annulaire, le premier joint et le second joint étant superposés l'un sur l'autre, le premier joint comprenant une première portion en saillie vers l'intérieur de la vanne par rapport à une première portion du second joint et sur laquelle la première partie du volet est destinée à venir s'appliquer, le second joint comprenant une seconde portion en saillie vers l'intérieur de la vanne par rapport à une deuxième portion du premier joint et sur laquelle la deuxième partie du volet est destinée à venir s'appliquer.

Préférentiellement, les premiers moyens d'étanchéité comprennent une surface plane d'appui à étanchéité de la première partie du volet et les seconds moyens d'étanchéité comprennent une surface plane d'appui à étanchéité de la seconde partie du volet, les surfaces planes des premier et second moyens d'étanchéité étant comprises dans un même plan.

Dans une réalisation pratique de l'invention, les premiers moyens et les seconds moyens d'étanchéité sont déplaçables à coulissement sur une distance prédéterminée inférieure à 1 millimètre et de préférence de l'ordre de 0,1 millimètre.

L'invention concerne également un moteur de véhicule automobile, comprenant au moins une vanne du type décrit précédemment.

L'invention concerne encore un véhicule automobile, comprenant un moteur intégrant une vanne comme décrite ci-dessus.

L'invention concerne également un véhicule automobile, caractérisé en ce qu'il est équipé d'un dispositif du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
la figure 1 est une vue schématique en coupe selon un plan perpendiculaire à l'axe du volet d'une vanne de contrôle moteur selon la technique connue, cette figure ayant été commentée précédemment ;
- les figures 2 à 4 sont des vues schématiques en coupe selon un plan perpendiculaire à l'axe du volet d'une vanne de contrôle moteur selon l'invention suivants les positions successives depuis la vanne en position ouverte (figure 2) jusqu'à la position de fermeture (figure 4).

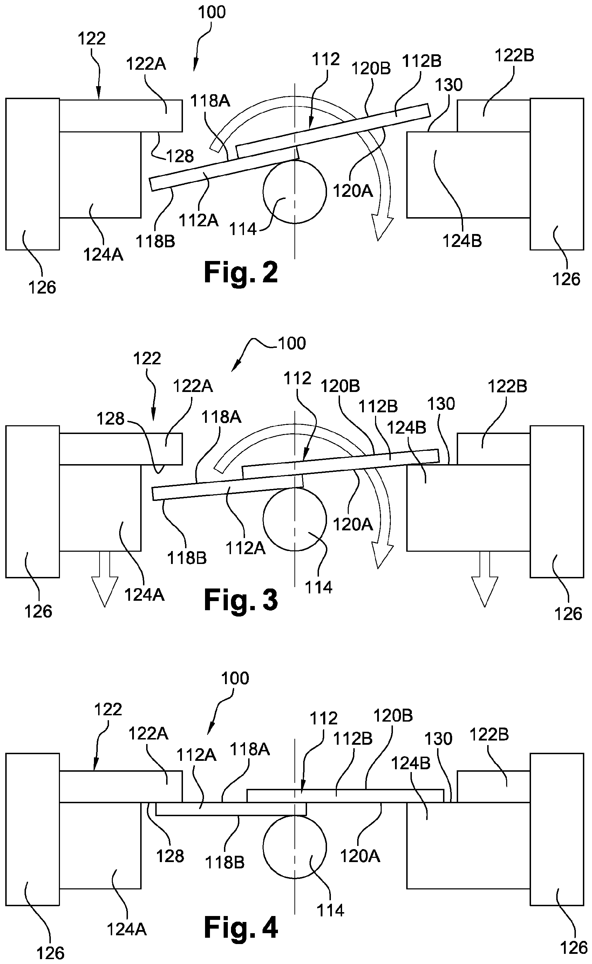

On se réfère maintenant à la figure 2 qui représente une vanne 100 de contrôle moteur selon l'invention comprenant un volet 112 monté pivotant autour d'un axe 114 de rotation. Le volet 112 comprend une première 112A et une seconde 112B parties reliées l'une à l'autre au niveau de l'axe de rotation 114. Les première 112A et seconde 112B parties du volet 112 sont de forme, en coupe, parallélépipédique. La première partie du volet 112 comprend une première surface plane 118A et une seconde surface plane 118B opposées. De manière similaire, la deuxième partie 112B du volet 112 comprend une première surface plane 120A et une seconde surface plane 120B opposées. Une extrémité de la première partie 112A du volet 112 est agencée sur l'axe 114 de manière à ce que sa première surface 118A soit située à l'opposé de l'axe 114 par rapport à sa seconde surface 118B. La deuxième partie 112B du volet 112 est appliquée au niveau d'une extrémité par l'intermédiaire de sa première surface 120A plane sur la première surface plane 118A de la première partie 112A du volet 112.

La première partie 112A et la deuxième partie 112B du volet 112 possède des épaisseurs constantes dans une direction parallèlement à l'axe 114.

Selon l'invention, la première partie 112A du volet 112 coopère avec des premiers moyens d'étanchéité et la seconde partie 112B du volet 112 coopère avec des seconds moyens d'étanchéité, les premiers et les seconds moyens d'étanchéité étant montés solidairement ensemble et à coulissement sur le corps de vanne 126.

Les premiers moyens sont formés par un premier joint annulaire 122 agencés sur un second joint annulaire 124 qui forme les seconds moyens d'étanchéité. Les deux joints annulaires 122, 124 sont avantageusement vissés l'un sur l'autre et sont réalisés dans un matériau rigide tel que l'aluminium ou l'inox.

Les deux joints annulaires 122, 124 sont montés à coulissement au niveau de leur périphérie externe sur la structure interne du corps 126 de vanne.

Un premier joint 122 comprend une première portion 122A en saillie vers l'intérieur de la vanne 100 par rapport à une première portion 124A du second joint 124 et est, en position de fermeture du volet, agencée en vis-à-vis de la première partie 112A du volet 112. Cette portion en saillie 124A du premier joint 124 comprend une surface plane 128 destinée à venir en contact en positon de fermeture avec la première surface plane 118A de la première partie 112A du volet 112.

Le second joint 124 comprend une seconde portion 124B en saillie vers l'intérieur de la vanne 100 par rapport à une seconde portion 122B du premier joint 122 et est agencée, en position de fermeture du volet, en vis-à-vis de la seconde partie 112B du volet 112. Cette portion 124B en saillie du second joint 124 comprend une surface plane 130 destinée à venir en contact en positon de fermeture avec la première surface plane 120A de la seconde partie 112B du volet 112.

Comme cela est visible sur la figure 4, la surface plane 128 de la portion 112A en saillie du premier joint 122, la surface plane 130 de la portion 124B en saillie du second joint 124 et les premières surfaces 118A, 120A planes des première et deuxième parties 112A, 112B du volet 112 sont situées sur un même plan en position de fermeture.

La fermeture à étanchéité du volet 112 s'effectue de la manière suivante. Un calculateur du moteur commande en rotation le volet 112 dans le sens indiqué par la flèche (figure 2). Dans la configuration représentée en figure 3, la deuxième partie 112B du volet 112 vient en contact avec la portion en saillie 12B du second joint 12, ce qui induit un déplacement vers un coulissement vers le bas des premier 122 et second 14 joints. Par suite de la rotation du volet 112, la première partie 112A du volet 112 se déplace (remonte) dans le sens opposé au déplacement des premiers 122 et seconds 14 joints ce qui induit un rapprochement puis un contact de la surface plane 128 de la première partie du volet 112 avec la surface plane 128 de la portion 122A en saillie du premier joint 122.

Ainsi, on observe que le montage selon l'invention permet d'assurer un contact optimal de la première partie 112A et de la deuxième partie 112B avec le premier joint 122 et le second joint 124, respectivement.

Dans une réalisation pratique de l'invention, les premier et second joints 122, 124 sont déplaçables à coulissement sur une distance prédéterminée inférieure à 1 millimètre et de préférence de l'ordre de 0,1 millimètre. Chaque joint 122, 124 peut avoir une épaisseur de l'ordre de 3 à 4 mm, par exemple.

Le terme « annulaire » utilisé en relation avec les joints 122, 124 signifie ici que le joint a un contour fermé, vu selon l'axe du joint. On comprend que tout type de contour fermé peut être utilisé à partir du moment où la forme est adaptée pour coopérer avec un volet 112 dans une vanne selon l'invention.

## Revendications

1. Vanne (100) de contrôle moteur pour un véhicule, en particulier un véhicule automobile, comprenant un volet (112) monté à rotation dans un corps (126) de vanne autour d'un axe (114) séparant ledit volet en une première partie (112A) et une deuxième (112B) partie, ledit volet (112) étant apte à coopérer avec des moyens d'étanchéité portés par le corps (126) de vanne dans une position de fermeture pour stopper l'écoulement d'un fluide au travers dudit volet pour laquelle la première partie (112A) du volet (112) coopère à étanchéité avec des premiers moyens (122A) d'étanchéité et la seconde partie (112B) du volet (112) coopère à étanchéité avec des seconds moyens d'étanchéité (124B), **caractérisée en ce que** les premiers moyens d'étanchéité (122A) et les seconds moyens (124B) d'étanchéité sont montés solidairement à coulissement le long du corps (126) de vanne.

2. Vanne selon la revendication 1, **caractérisé en ce que** les premiers moyens d'étanchéité comprennent un premier joint annulaire (122) et les seconds moyens d'étanchéité comprennent un second joint annulaire(124), le premier joint (122) et le second joint (124) étant superposés l'un sur l'autre, le premier joint (122) comprenant une première portion (122A) en saillie vers l'intérieur de la vanne (100) par rapport à une première portion (124A) du second joint (124) et sur laquelle la première partie (112A) du volet (112) est destinée à venir s'appliquer, le second joint (124) comprenant une seconde portion (124B) en saillie vers l'intérieur de la vanne (100) par rapport à une deuxième portion (122B) du premier joint (122) et sur laquelle la deuxième partie (112B) du volet (112) est destinée à venir s'appliquer.

3. Vanne selon la revendication 1 ou 2, **caractérisée en ce que** les premiers moyens d'étanchéité comprennent une surface plane d'appui (128) à étanchéité de la première partie (112A) du volet (112) et les seconds moyens d'étanchéité comprennent une surface plane (130) d'appui à étanchéité de la seconde partie (112B) du volet (112), les surfaces planes des premier et second moyens d'étanchéité étant comprises dans un même plan.

4. Vanne selon l'une des revendications 1 à 3, **caractérisée en ce que** les premiers moyens (122A) et les seconds (124B) moyens d'étanchéité sont déplaçables à coulissement sur une distance prédéterminée inférieure à 1 millimètre et de préférence de l'ordre de 0,1 millimètre.

5. Moteur de véhicule automobile, **caractérisé en ce qu'**il comprend au moins une vanne selon l'une des revendications précédentes.

6. Véhicule automobile, **caractérisé en ce qu'**il comprend un moteur selon la revendication 5.

## Patentansprüche

1. Motorregelventil (100) für ein Fahrzeug, insbesondere ein Kraftfahrzeug, umfassend eine Klappe (112), die in einem Ventilgehäuse (126) drehbar um eine Achse (114) gelagert ist, welche die Klappe in einen ersten Teil (112A) und einen zweiten Teil (112B) trennt, wobei die Klappe (112) geeignet ist, in einer Schließstellung mit Dichtmitteln, die vom Ventilgehäuse (126) getragen werden, zusammenzuwirken, um das Strömen eines Fluids durch die Klappe zu stoppen, wobei der erste Teil (112A) der Klappe (112) abdichtend mit ersten Dichtmitteln (122A) zusammenwirkt und der zweite Teil (112B) der Klappe (112) abdichtend mit zweiten Dichtmitteln (124B) zusammenwirkt, **dadurch gekennzeichnet, dass** die ersten Dichtmittel (122A) und die zweiten Dichtmittel (124B) fest verbunden verschieblich entlang des Ventilgehäuses (126) gelagert sind.

2. Ventil nach Anspruch 1, **dadurch gekennzeichnet, dass** die ersten Dichtmittel eine erste ringförmige Dichtung (122) umfassen und die zweiten Dichtmittel eine zweite ringförmige Dichtung (124) umfassen, wobei die erste Dichtung (122) und die zweite Dichtung (124) übereinander liegen, wobei die erste Dichtung (122) einen ersten Abschnitt (122A) umfasst, der in Bezug auf einen ersten Abschnitt (124A) der zweiten Dichtung (124) zum Inneren des Ventils (100) hin vorspringt und auf dem der erste Teil (112A) der Klappe (112) zur Anlage kommen soll, wobei die zweite Dichtung (124) einen zweiten Abschnitt (124B) umfasst, der in Bezug auf einen zweiten Abschnitt (122B) der ersten Dichtung (122) zum Inneren des Ventils (100) hin vorspringt und auf dem der zweite Teil (112B) der Klappe (112) zur Anlage kommen soll.

3. Ventil nach Anspruch 1 oder 2, **dadurch gekennzeichnet, dass** die ersten Dichtmittel eine ebene Auflagefläche (128) zur Abdichtung des ersten Teils (112A) der Klappe (112) umfassen und die zweiten Dichtmittel eine ebene Auflagefläche (130) zur Abdichtung des zweiten Teils (112B) der Klappe (112) umfassen, wobei die ebenen Flächen der ersten und zweiten Dichtmittel in derselben Ebene enthalten sind.

4. Ventil nach einem der Ansprüche 1 bis 3, **dadurch gekennzeichnet, dass** die ersten Dichtmittel (122A) und die zweiten Dichtmittel (124B) über einen vorgegebenen Abstand von weniger als 1 Millimeter und bevorzugt in der Größenordnung von 0,1 Millimeter verschieblich bewegbar sind.

5. Kraftfahrzeugmotor, **dadurch gekennzeichnet, dass** er mindestens ein Ventil nach einem der vorhergehenden Ansprüche umfasst.

6. Kraftfahrzeug, **dadurch gekennzeichnet, dass** es einen Motor nach Anspruch 5 umfasst.

## Claims

1. Engine control valve (100) for a vehicle, particularly a motor vehicle, comprising a flap (112) mounted with the ability to rotate in a valve body (126) about an axis (114) dividing the said flap into a first part (112A) and a second part (112B), the said flap (112) being able to collaborate with sealing means borne by the valve body (126) in a closed position in order to stop the flow of a fluid through the said flap, for which position the first part (112A) of the flap (112) collaborates in a sealed manner with first sealing means (122A) and the second part (112B) of the flap (112) collaborates in a sealed manner with second sealing means (124B), **characterized in that** the first sealing means (122A) and the second sealing means (124B) are mounted so that they slide as one along the valve body (126).

2. Valve according to Claim 1, **characterized in that** the first sealing means comprise a first annular seal (122) and the second sealing means comprise a second annular seal (124), the first seal (122) and the second seal (124) being superposed on one another, the first seal (122) comprising a first portion (122A) projecting towards the inside of the valve (100) with respect to a first portion (124A) of the second seal (124) and on which the first part (112A) of the flap (112) is intended to come to bear, the second seal (124) comprising a second portion (124B) projecting towards the inside of the valve (100) with respect to a second portion (122B) of the first seal (122) and on which the second part (112B) of the flap (112) is intended to come to bear.

3. Valve according to Claim 1 or 2, **characterized in that** the first sealing means comprise a flat bearing surface (128) sealing against the first part (112A) of the flap (112) and the second sealing means comprise a flat surface (130) bearing with sealing against the second part (112B) of the flap (112), the flat surfaces of the first and second sealing means being comprised in the one same plane.

4. Valve according to one of Claims 1 to 3, **characterized in that** the first sealing means (122A) and the second sealing means (124B) are able to be moved in sliding over a predetermined distance of less than 1 mm and preferably in the order of 0.1 mm.

5. Motor vehicle engine, **characterized in that** it comprises at least one valve according to one of the preceding claims.

6. Motor vehicle, **characterized in that** it comprises an engine according to Claim 5.
